# EUROPÄISCHE PATENTANMELDUNG

(11) **EP 1 881 244 A2**
(43) Veröffentlichungstag der Anmeldung: **23.01.2008**
(21) Anmeldenummer: 07012766.7
(22) Anmeldetag: 29.06.2007
(51) Int. Cl.: F16K 7/07, B65H 7/16

(54) **Stufenlose Luftschaltung**

(30) Priorität: 21.07.2006 DE 202006011282 U
(71) Anmelder: MABEG Maschinenbau GmbH & Co. KG, 64546 Mörfelden/Walldorf (DE)
(72) Erfinder: Bauer, Gerd, 63533 Mainhausen (DE); Buschulte, Rainer, 72660 Beuren (DE)
(74) Vertreter: Stahl, Dietmar

(57) **Zusammenfassung**

Die Erfindung betrifft eine Vorrichtung zur Vereinfachung der Luftversorgung für eine Bogentrenneinrichtung zur Zuführung von Bogen zu Bogen verarbeitenden Maschinen als Einzelbogen oder Bogenstrom, wobei die Bogen von einem Stapel vereinzelt werden.

In der Bogentrenneinrichtung ist zur Versorgung von Verbrauchern mit Blasluft oder Saugluft vorgesehen, eine steuerbare, vorzugsweise auch geschwindigkeitsabhängig regelbare Druckbeaufschlagung wenigstens eines Verbrauchersteuerventils z. B. in Form eines Quetschventils (6,8) anzuordnen.

## Beschreibung

Die Erfindung betrifft eine Vorrichtung nach dem Oberbegriff des Anspruchs 1.

Es ist bekannt Saug- und/oder Blasluftsteuerungen für Verbraucher von Fördereinrichtungen zum Zuführen von Bogen zu einer Bogen verarbeitenden Maschinen, z.B. Druckmaschinen, vorzusehen. Hierbei kann ein Druckanschluss eines Verbrauchers über eine Zuführleitung mit Unter- und/oder Überdruck einer Druckluftquelle beaufschlagbar sein. In diesem Zusammenhang sind stufenlose Luftschaltungen bekannt, die dazu dienen, Lockerungs- bzw. Trennluft zum Betrieb einer Bogentrenneinrichtung zu erzeugen, die zur Vereinzelung des jeweils obersten Bogens eines Bogenstapels und Zuführung des vereinzelten Bogens in eine Fördereihrichtung dient.

Derartige Steuerungen werden insbesondere bei Bogenanlegern für Bogen verarbeitende Maschinen zur Versorgung von Saugern mit Unterdruck oder von Blasdüsen mit Überdruck benötigt. Von der jeweiligen Unter- bzw. Überdruckquelle und der entsprechenden pneumatischen Steuereinheit führen relativ lange Zuführleitungen zu den Verbrauchern. Die verschiedenartigsten Bogen wie Papier, Karton, Pappe, Wellpappe oder Blech, die verarbeitbar sein sollen, erfordern eine Anpassung der Intensität sowie des Zeitpunkts der jeweiligen Druck- bzw. Unterdruckbeaufschlagung am Verbraucher.

Aus der DE 195 14 746 C2 ist ein Regelventil zur Druckluftversorgung eines Bogenanlegers bekannt. Zum Regeln des Blasluftbedarfs von Blasluftverbrauchern ist ein Regelventil vorgesehen, das eine Stelleinrichtung zum Verändern der durchströmenden Blasluftmenge besitzt, wobei ein den Durchtrittsquerschnitt veränderndes Ventilglied vorgesehen ist. Der Durchtrittsquerschnitt ist in Abhängigkeit von der Maschinengeschwindigkeit der Bogen verarbeitenden Maschine einstellbar. Das Regelventil ist ein Schieberventil, dessen Ventilschieber in eine von der Maschinengeschwindigkeit der Bogen verarbeitenden Maschine abhängige Stellung bewegbar ist und der verschiebbaren Kolben aufweist, der entgegen einer Federkraft von einem variablen Regeldruck beaufschlagbar ist.

Aus der DE-OS 42 07 635 ist eine Einrichtung zum Regeln des Blasluftbedarfs von Blasluftverbrauchern bekannt. Dabei ist das Regelventil von einer elektromotorischen Stelleinrichtung verstellbar, die von einer Ansteuerelektronik angesteuert wird. Das von der Ansteuerelektronik dem Regelventil zugeführte Ansteuersignal wird in Abhängigkeit von dem Blasluftdruck in der Leitung zwischen Regelventil und Blasluftverbraucher, von der Maschinendrehzahl der Bogen verarbeitenden Maschine und von der Art der zu verarbeitenden Bogen erzeugt. Das Regelventil besitzt ein von der Stelleinrichtung verstellbares Ventilglied, mit dem eine vom Blasluftkanal nach außen führende Öffnung mehr oder weniger zu öffnen ist. Dadurch ist der dem Blasluftverbraucher zuführbare Blasluftdruck regelbar.

Weiterhin ist aus der DE-OS 21 46 121 eine Blasluftsteuerung für Bogenanleger bekannt. Die beschriebene Einrichtung weist einen Elektromotor auf, durch den ein Ventilglied eines Regelventils verstellbar ist. Dabei ist zwischen dem Elektromotor und dem Ventilglied ein Untersetzungsgetriebe angeordnet. Darüber hinaus benötigt der Elektromotor eine spezielle Energieversorgung zum Betrieb eines Reglers, der wiederum mechanisch von einer weiteren Verstelleinrichtung in Verbindung mit der Druckmaschinensteuerung beeinflusst wird.

Schließlich ist aus der DD-PS 4 229 eine Vorrichtung zum Absondern des obersten Bogens von einem Stapel bekannt. Diese Einrichtung weist Blasdüsen auf, deren Luftversorgung mittels eines Steuerschiebers ein- und ausgeschaltet werden kann. Die Bewegung des Steuerschiebers erfolgt mittels eines von Saugluft beaufschlagten Kolbens, der zwischen zwei Endstellungen bewegt wird. Eine Regelung der Blasluftmenge an den Blasdüsen ist nicht möglich.

Aus der DE195 43 440 A1 ist eine Saug- und/oder Blasluftsteuerung bekannt. Sie ist für Verbraucher einer Zuführeinrichtung zum Zuführen von Bogen zu einer Bogen verarbeitenden Maschine vorgesehen und ist mit einem Druckanschluss des Verbrauchers über eine Zuführleitung vom Unter- und/oder Überdruck einer Unterdruck- und/oder Überdruckwelle beaufschlagbar. An dem Druckanschluss des Verbrauchers ist unmittelbar ein Auslass eines elektrisch steuerbaren Ventils angeschlossen. Das Ventil ist mittels einer elektronischen Steuereinrichtung ansteuerbar und mit einer Zuführleitung verbunden. An den Blas- oder Saugluftauslaß des elektrisch steuerbaren Ventils können die Druckanschlüsse mehrerer Verbraucher angeschlossen sein. Verbraucher und elektrisch steuerbares Ventil können eine Baueinheit bilden.

Es ist bekannt, dass bei der Vereinzelung von Bogen an den entsprechenden Arbeitselementen in der Anfahrphase der Vereinzelungsvorrichtung ein geringeres Luftvolumen benötigt wird. Bei zunehmender Geschwindigkeit ist dagegen ein größeres Luftvolumen erforderlich.

Eine derartige Luftversorgung von entsprechenden Verbrauchern ist bei bekannten Einrichtungen nur mit aufwändigen Steuerungen und entsprechend teueren Vorrichtungen möglich.

Aufgabe der Erfindung ist es daher, eine Einrichtung der eingangs genannten Art zu schaffen, die einen einfachen, kostengünstig herstellbaren Aufbau besitzt und mit einem geringeren, vordosierten Luftvolumen arbeitet.

Die Lösung dieser Aufgabe gestaltet sich nach den Merkmalen des Anspruchs 1.

In vorteilhafter Weise ist das Druckventil als den Lufteinlass für den Verbraucher bildendes Quetschventil ausgebildet, das mittels die Luftversorgung steuernder pneumatischer Steuereinrichtungen einstellbar ist.

Hierzu kann über ein Mehrwegeventil in einer ersten Schaltstellung mittels Druckluft das Quetschventil geschlossen werden. Damit ist die Luftversorgung zum Verbraucher unterbrochen.

Bei einer zweiten Schaltstellung kann Druckluft am Mehrwegeventil über ein ansteuerbares elektropneumatisches Druckregelventil geschwindigkeitsabhängig dosiert werden. Bei Zuleitung dieser Steuerluft zum Quetschventil wird dessen Durchgang bei geringerer Geschwindigkeit verengt oder bei zunehmender Geschwindigkeit erweitert wird. Damit wird bei kleinerer Geschwindigkeit ein geringerer und bei hohen Geschwindigkeiten ein größerer Luftdurchsatz erreicht, wobei das Ventil durch seine Bauart bedingt günstige Strömungseigenschaften aufweist

In vorteilhafter Weise wird so ein geringerer Luftdurchsatz für die Lockerungs- und Trennluft bei kleinerer Geschwindigkeit am Bogentrenner erreicht. Dies hat sich in der Praxis in der Anfahrtsphase als Vorteil herausgestellt. Entsprechendes gilt für einen vollen Luftdurchsatz bei maximaler Geschwindigkeit.

In einer weiteren vorteilhaften Ausführungsform kann Saugluft, die zur Vereinzelung des obersten Bogens eines Bogenstapels erforderlich ist, über ein weiteres Quetschventil gesteuert von einem weiteren Mehrwegeventil zugeschaltet werden.

Eine Kombination der oben beschriebenen Ausführungsformen ermöglicht, die Lockerung der ersten Bogen am Bogentrenner, bevor die Saugluft dazu geschaltet wird, was sich in der Praxis als Vorteil herausgestellt hat.

In vorteilhafter Ausprägung kann eine elektrische Ansteuerung erfolgen, indem mittels eines Sensors die benötigte Luft pro Bogen voreingestellt und als Normsignal an das Regelventil übermittelt wird. Diese Steuerung kann innerhalb einer dem Bogenanleger zugeordneten SPS durch Auswertung der Bogenleistung am Impulseingang erfolgen, woraus das Regelventil angesteuert werden kann.

Weitere vorteilhafte Ausgestaltungen ergeben sich aus den Unteransprüchen.

Im Folgenden wird ein Ausführungsbeispiel anhand einer zeichnerischen Darstellung näher erläutert.

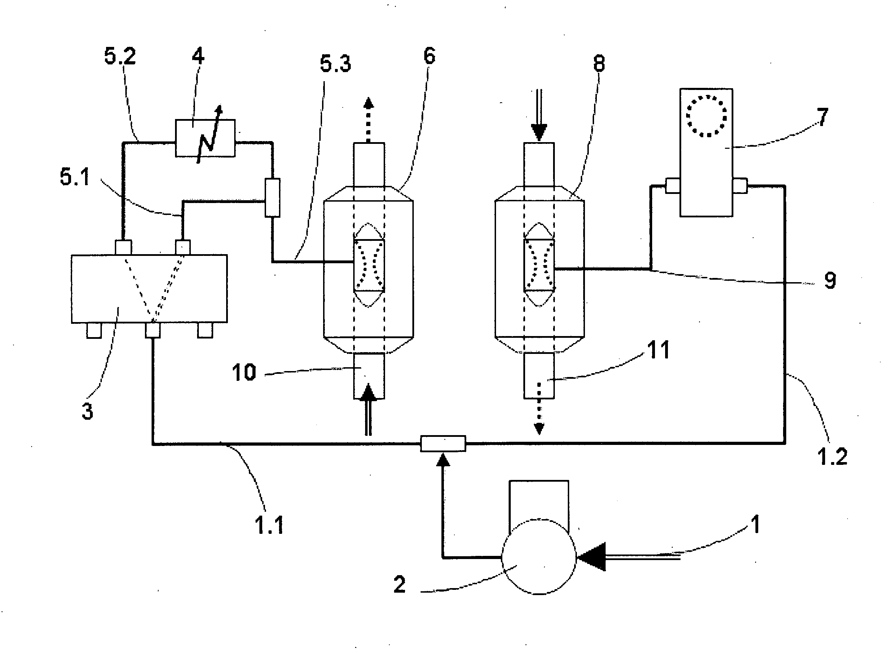

In der einzigen Figur ist eine Vorrichtung zur Steuerung der Luftversorgung einer Bogentrenneinrichtung schematisch dargestellt.

Über eine Zufuhrleitung 1 wird Steuerluft einem einstellbaren Druckventil 2. Am Druckventil wird ein konstanter Betriebsdruck für die allgemeine Steuerluft der Luftregelung eingestellt. Hierfür kann an dem Druckventil eine Anzeigeeinrichtung vorgesehen sein.

Weiterhin wird die Steuerluft über eine Steuerleitung 1.1 einem ersten Mehrwegeventil 3 zugeleitet. Von dem Mehrwegeventil 3 führen zwei weitere Steuerleitungen 5.1 und 5.2 weg. In der Steuerleitung 5.2 ist ein Druckregelventil 4 vorgesehen. Die Steuerleitungen 5.1 und 5.2 werden in einer weiteren Steuerleitung 5.3 zusammengefasst. Die Steuerleitung 5.3 führt zu einem ersten Verbrauchersteuerventil 6. Das Verbrauchersteuerventil 6 ist als so genanntes Quetschventil ausgeführt. Dabei führt eine Zuführleitung 10 zu einem Verbraucher als elastisches, druckbelastbares Leitungsstück durch das Verbrauchersteuerventil 6. Das Verbrauchersteuerventil 6 ist beispielsweise für die Versorgung von Verbrauchern der Bogentrenneinrichtung mit Blasluft vorgesehen.

Weiterhin wird die Steuerluft über eine Steuerleitung 1.2 einem zweiten Mehrwegeventil 7 zugeleitet. Von dem Mehrwegeventil 7 führt eine weitere Steuerleitungen 9 weg. Die Steuerleitung 9 führt zu einem zweiten Verbrauchersteuerventil 8. Auch das Verbrauchersteuerventil 8 ist als so genanntes Quetschventil ausgeführt. Dabei führt eine Zuführleitung 11 zu einem Verbraucher als elastisches, druckbelastbares Leitungsstück durch das Verbrauchersteuerventil 8. Das Verbrauchersteuerventil 8 ist beispielsweise für die Versorgung von Verbrauchern der Bogentrenneinrichtung mit Saugluft vorgesehen.

### Die Funktion der Vorrichtung ist wie folgt:

Das Mehrwegeventil 3 sorgt in einer Grundstellung dafür, dass über eine Schaltstellung Druckluft das Verbrauchersteuerventil (Quetschventil) 6 komplett geschlossen ist. Dabei liegt der volle Druck der an dem Druckventil 2 eingestellten Steuerluft in der Steuerleitung 5.3 an. In dem Verbrauchersteuerventil 6 wird dabei die zum Verbraucher führenden Versorgungsleitung 10 im Bereich des elastischen Leitungselementes durch den Druck der Steuerluft zusammengepresst und auf diese Weise der Luftdurchsatz gesperrt.

In einer zweiten Schaltstellung des Mehrwegeventils 3 wird die Steuerluft über das z.B. analog ansteuerbare elektropneumatische Druckregelventil 4 so dosiert, dass mittels des Druckes der Steuerluft über die Steuerleitungen 5.2 und 5.3 das Verbrauchersteuerventil 6 die Zuführleitung 10 in seinem Durchgang gezielt verengt bzw. erweitert.
Die Druckregelung am Druckregelventil 4 erfolgt bevorzugt geschwindigkeitsabhängig, d. h. die Einstellung am Druckregelventil 4 wird von einer entsprechenden und an sich bekannten Steuerung abhängig von der Geschwindigkeit der Bogentrenneinrichtung verändert. Prinzipiell wird das Druckregelventil 4 den Druck der Steuerluft bei geringen Maschinengeschwindigkeiten wenig und bei höheren Maschinengeschwindigkeiten stärker reduzieren.
Daraus ergibt sich folglich, dass bei geringerer Maschinengeschwindigkeit die Durchtrittsöffnung im Verbrauchersteuerventil 6 verengt wird. Bei zunehmender Maschinengeschwindigkeit hingegen wird die Durchtrittsöffnung in der Zuführleitung 10 erweitert. Daraus abgeleitet wird somit bei kleinerer Maschinengeschwindigkeit ein geringerer Luftdurchsatz, und bei höherer Geschwindigkeit ein größerer Luftdurchsatz erreicht.

Die Vorrichtung bietet den besonderen Vorteil, dass auf einfachste Weise ein Eingangsdruck auf das Verbrauchersteuerventil (Quetschventil) 6 an einer dem Ventil vorgeschalteten Anzeige ablesbar ist. Somit kann die Handhabung verbessert werden. In der Praxis hat sich nämlich herausgestellt, dass ein geringerer Luftdurchsatz für Lockerungs- und Trennluft bei kleinerer Maschinengeschwindigkeit an der Bogentrennvorrichtung in der Anfahrtsphase ein großer Vorteil für die Bogenvereinzelung ist. Gleichzeitig ist auch eine voller Luftdurchsatz bei maximaler Maschinengeschwindigkeit von Vorteil.

Die bisher beschriebenen Teile der erfindungsgemäßen Vorrichtung beziehen sich auf Blasluftverbraucher in der Bogentrennvorrichtung. Hier kommen vor allem Trenn-, Lockerungs- und Tragluftbläser zum Einsatz.

Es wird aber auch Saugluft zur Vereinzelung des oberen Bogens eines Bogenstapels benötigt. Die hierzu erforderliche Steuerung erfolgt mittels des Verbrauchersteuerventils 8, das von dem Mehrwegeventil 7 gesteuert wird.
Hierzu wird die Steuerluft mittels der Steuerleitung 1.2 dem Mehrwegeventil 7 zugeführt. In der Grundstellung des Mehrwegeventils 7 ist die Luftzufuhr zur Steuerleitung 9 gesperrt. Dadurch erhält das Verbrauchersteuerventil (Quetschventil) 8 keine Druckluftbeaufschlagung. Für die Luftversorgung mit Saugluft hat die Zuführleitung 11 somit einen voll geöffneten Durchgang.
Die Abschaltung der Saugluftzufuhr erfolgt über eine zweite Schaltstellung am Mehrwegeventil 7. Damit wird die Steuerluft mit dem voreingestellten Druck über die Steuerleitung 9 am Verbrauchersteuerventil 8 voll wirksam. Die Zuführleitung 11 wird im Bereich ihres elastischen Leitungselementes in dem Verbrauchersteuerventil 8 zusammengepresst, wodurch die Saugluftzufuhr unterbunden wird. Im Fall der Saugluftzufuhr ist an dieser Stelle an sich keine feinfühligere Luftdosierung notwendig, da für eine sichere Bogentrennung immer der volle Unterdruck der Saugluft verfügbar sein muss. Für spezielle Fälle wie dünne, so genannte durchsaugende Materialien kann aber auch eine Dosiereinstellung über das Verbrauchersteuerventil 8 vorgesehen werden. Diese betrifft dann nur die Grundeinstellung und muss nicht geschwindigkeitsabhängig nachgeführt werden. Grundsätzlich ist hier aber auch eine Schaltung zur Dosierung von Saugluft in gleicher Weise möglich wie dies für die Schaltung zur Blasluft beschrieben wurde.

Durch die oben beschriebene Vorrichtung wird es auf einfache Weise ermöglicht, die Lockerung der ersten Bogen mittels Blasluft an der Bogentrennvorrichtung zu erreichen, bevor die Saugluft zur eigentlichen Bogentrennung dazu geschaltet wird. Dies ist nach Erfahrungen in der Praxis ein großer Vorteil.

In einer entsprechenden Steuervorrichtung wird nach dem folgenden einfachen Prinzip verfahren:

Zunächst wird mittels eines Sensors für die Verbraucherluft ein Signal zur Maschinengeschwindigkeit bzgl. der aktuellen Bogenleistung generiert und der Steuerung zugeführt. Durch entsprechende Umwandlung wird ein Normsignal erzeugt, mittels dessen dann das Druckregelventil 4 angesteuert werden kann.

In gleicher Weise kann die Steuerung über eine SPS (Speicherprogrammierbare Steuerung) erfolgen. Hierzu wird die Ansteuerung so gewählt, dass an einem Impulseingang die Maschinengeschwindigkeit (Bogenleistung) ausgewertet und über einen Analogausgang danach das Druckregelventil 4 angesteuert wird.

Auch steuerungstechnisch ist also bei der erfindungsgemäß vorgeschlagenen Lösung ein geringer Aufwand erforderlich.

### Bezugszeichenliste

- 1: Zufuhrleitung 1.1, 1.2
- 2: Druckventil
- 3: Mehrwegeventil
- 4: Druckregelventil
- 5: Steuerleitungen 5.1, 5.2, 5.3
- 6: Verbrauchersteuerventil
- 7: Mehrwegeventil
- 8: Verbrauchersteuerventil
- 9: Steuerleitung
- 10: Zuführleitung
- 11: Zuführleitung

## Patentansprüche

1. Vorrichtung zum Regeln des Blas- und/oder Saugluftbedarfs von Blas- und/oder Saugluftverbrauchern in einer Bogentrenneinrichtung zur Vereinzelung von Bogen von einem Stapel zur Zufuhr der Bogen zu einer Bogen verarbeitenden Maschine mit einem Regelventil, das eine Stelleinrichtung zum Verändern einer eine Luftzuführung zu einem oder mehreren Verbrauchern durchströmenden Blas- und/oder Saugluftmenge besitzt, wobei ein einen Durchtrittsquerschnitt in der Luftzuführung zu den Verbrauchern unter Luftbeaufschlagung veränderndes Ventilglied vorgesehen ist,
**dadurch gekennzeichnet,**
**dass** ein Ventilglied (6, 8) wenigstens einem der Transportwege in der Luftzuführung der Blas- und/oder Saugluft zu den Verbrauchern direkt zugeordnet ist und dass das Ventilglied (6, 8) Teil der die Blas- und/oder Saugluft zum Verbraucher führenden Luftzuführung (10, 11) ist.

2. Vorrichtung nach Anspruch 1,
**dadurch gekennzeichnet,**
**dass** das Ventilglied (6, 8) mit einem Leitungssystem (1, 1.1, 1.2; 5.1, 5.2, 5.3; 9) für separate Steuerluft verbunden ist.

3. Vorrichtung nach Anspruch 1 oder 2,
**dadurch gekennzeichnet,**
**dass** in dem Leitungssystem (1, 1.1, 1.2; 5.1, 5.2, 5.3; 9) für Steuerluft eine Stelleinrichtung (2) zur Einstellung des Druckes der Steuerluft vorgesehen ist.

4. Vorrichtung nach Anspruch 1 bis 3,
**dadurch gekennzeichnet,**
**dass** in dem Leitungssystem für Steuerluft ein den Durchtrittsquerschnitt des Ventilglieds (6, 8) ist in Abhängigkeit von der Maschinengeschwindigkeit der Bogen verarbeitenden Maschine durch Veränderung des Druckes der Steuerluft einstellbares Druckregelventil (4) vorgesehen ist.

5. Vorrichtung nach Anspruch 4,
**dadurch gekennzeichnet,**
**dass** mittels des Druckregelventils (4) geschwindigkeitsabhängig Steuerluft so dosierbar ist, dass an dem Ventilglied (6, 8) ein Blas- oder Saugluft als Verbraucherluft führender Durchgang bei geringerer Maschinengeschwindigkeit verengt oder bei zunehmender Maschinengeschwindigkeit erweitert wird, so dass bei kleinerer Geschwindigkeit ein geringerer und bei höherer Geschwindigkeit ein größerer Luftdurchsatz erreicht wird.

6. Vorrichtung nach Anspruch 1 bis 5,
**dadurch gekennzeichnet,**
**dass** die Steuerluft dem Ventilglied (6, 8) über ein Mehrwegeventil (3, 7) zugeführt wird.

7. Vorrichtung nach Anspruch 6,
**dadurch gekennzeichnet,**
**dass** das Mehrwegeventil (3, 7) eine erste Schaltstellung aufweist, in der mittels der Steuerluft das Verbrauchersteuerventil (6, 8) geschlossen ist und dass das Mehrwegeventil (3, 7) eine zweite Schaltstellung aufweist, in der mittels der Steuerluft das Verbrauchersteuerventil (6, 8) geöffnet ist.

8. Vorrichtung nach Anspruch 6 oder 7,
**dadurch gekennzeichnet,**
**dass** die zur Vereinzelung des oberen Bogens eines Bogenstapels erforderliche Blas- und/oder Saugluft in der zweiten Schaltstellung mittels des Mehrwegeventils (3, 7) mittels der über das Druckregelventil (4) geführten Steuerluft an dem dann geöffneten Verbrauchersteuerventil (6, 8) dosierbar ist.

9. Vorrichtung nach Anspruch 2 bis 8,
**dadurch gekennzeichnet,**
**dass** alle Verbrauchersteuerventile (6, 8) mit dem gleichen System zur Versorgung mit Steuerluft verbunden sind.

10. Vorrichtung nach Anspruch 9,
**dadurch gekennzeichnet,**
**dass** die Verbrauchersteuerventile (6, 8) als Quetschventile ausgebildet sind.
